Europäisches Patentamt

European Patent Office

Office européen des brevets

(11) Veröffentlichungsnummer : **0 084 107**
**B1**

(12) EUROPÄISCHE PATENTSCHRIFT

(19)

(45) Veröffentlichungstag der Patentschrift :
05.03.86

(21) Anmeldenummer : 82111177.0

(22) Anmeldetag : 02.12.82

(51) Int. Cl.⁴ : **B 60 N   1/02**

(54) **Elektrisch verstellbarer Fahrzeugsitz.**

(30) Priorität : 09.12.81 DE 3148724

(43) Veröffentlichungstag der Anmeldung :
27.07.83 Patentblatt 83/30

(45) Bekanntmachung des Hinweises auf die Patenterteilung : 05.03.86 Patentblatt 86/10

(84) Benannte Vertragsstaaten :
**DE FR GB IT SE**

(56) Entgegenhaltungen :
**DE-A- 3 023 557**
**DE-U- 7 720 501**
**US-A- 3 254 163**

(73) Patentinhaber : **BAYERISCHE MOTOREN WERKE**
**Aktiengesellschaft**
**Postfach 40 02 40 Petuelring 130**
**D-8000 München 40 (DE)**

(72) Erfinder : **Vogelmann, Gerolf**
**Dr.-Scharl-Strasse 11**
**D-8068 Pfaffenhofen/Ilm (DE)**

(74) Vertreter : **Dexheimer, Rolf**
**Bayerische Motoren Werke Aktiengesellschaft Post-**
**fach 40 02 40 Petuelring 130 - AJ-31**
**D-8000 München 40 (DE)**

## Beschreibung

Die Erfindung bezieht sich auf einen elektrisch verstellbaren Fahrzeugsitz, wie er im Oberbegriff des Hauptanspruchs beschrieben ist.

Ein solcher Fahrzeugsitz geht aus der DE-A-30 23 557 hervor. Die elektrischen Schalter für die Sitzverstellung sind hier seitlich am Sitzkissen in Form eines Tastenfelds angeordnet. Der Nachteil einer solchen Anordnung liegt darin, daß der Fahrer das Tastenfeld nicht ohne weiteres einsehen, sondern lediglich ertasten kann. Er ist gezwungen für die gewünschte Sitzverstellung die jeweiligen Schalter durch Probieren zu suchen. Dadurch wird der Komfort, den ein elektrisch verstellbarer Sitz dem Fahrer bietet, herabgesetzt.

Die US-A-3 254 163 zeigt eine Schalteranordnung für die Sitzverstellung an der mit der Fahrzeugtür verbundenen Armlehne. Insgesamt sind für die Sitzverstellung drei Schalter vorgesehen, wobei der mittlere Schalter durch sinngemäße Betätigung ein Verstellen des Fahrzeugsitzes in der Höhe und in der Längsrichtung bewirkt. Die beiden anderen Schalter dienen zum Heben und Absenken der hinteren und vorderen Sitzkissenkante. Ihre Betätigungsrichtung entspricht aber nicht der gewünschten Verstellrichtung.

Gegenüber der DE-A-30 23 557 weist diese Ausführung den Vorteil auf, daß die Sitzverstellschalter gut einsehbar sind. Andererseits ergibt aber ihre Anordnung auf der Armlehne eine räumliche Trennung vom Fahrzeugsitz. Es sind daher zusätzlich Symbole und Anweisungen nötig, um dem Fahrzeuginsassen den Sinn und Zweck dieser Schalter zu verdeutlichen.

Aufgabe der Erfindung ist es daher, die elektrischen Schalter für die Verstellung des Fahrzeugsitzes so anzuordnen, daß sie leicht auffindbar sind und eindeutig erkennen lassen, daß sie für die Verstellung des Fahrzeugsitzes vorgesehen und welcher Verstellbewegung des Fahrzeugsitzes sie zugeordnet sind.

Die Aufgabe wird erfindungsgemäß mit den Merkmalen des Hauptanspruchs gelöst.

Der Fahrer braucht bei dem erfindungsgemäßen Fahrzeugsitz nicht lange danach zu suchen, wie der Sitz verstellt werden kann. Er wird aus Gewohnheit dorthin greifen, wo er bei einer mechanischen Sitzverstellung den Verstellhebel zumindest für die Rückenlehne vermutet, nämlich seitlich vom Sitzkissen, im Bereich der Trennfuge zwischen Sitzkissen und Rückenlehne. Mit dem dort sitzenden Sitzverstellhebel mit den elektrischen Schaltern kann er alle Sitzeinstellungen und die Verstellung der Kopfstütze, soweit die Rückenlehne eine Kopfstütze aufweist, mühelos vornehmen.

Um Verwechslungen der Schalter auszuschließen, ist es vorteilhaft, sie so auszulegen und am Sitzverstellhebel anzuordnen, daß ihre Betätigungsrichtung der gewünschten Verstellrichtung des Fahrzeugsitzes entspricht. So läßt sich die Rückenlehne durch Hochziehen oder Niederdrücken des Verstellhebels nach hinten bzw. nach vorne schwenken. Für die Sitzverstellung insgesamt ist am Verstellhebel ein Schiebeschalter vorgesehen. Wird er nach vorne geschoben, fährt der Sitz nach vorne, wird er nach hinten geschoben, fährt der Sitz in diese Richtung. Schiebeschalter sind ebenfalls für die Höhenverstellung des Sitzkissens vorgesehen. Auch hier ist die Betätigungsrichtung der Schalter gleichsinnig mit der gewünschten Verstellrichtung. Werden sie also nach oben geschoben, wird das Sitzkissen angehoben und bei der entgegengesetzten Betätigungsrichtung abgesenkt. Es sind hierfür vorzugsweise zwei hintereinander angeordnete Schiebeschalter vorgesehen, bei denen mit dem vorderen das Sitzkissen in seinem vorderen Abschnitt und mit dem hinteren es in seinem hinteren Abschnitt in der Höhe verstellt werden kann.

Um die Schiebeschalter in der beschriebenen Lage anordnen zu können, ist es vorteilhaft, wenn das Griffteil des Sitzverstellhebels in etwa quaderförmig ausgebildet ist. Dadurch läßt sich der Schiebeschalter für das Vor- und Zurückfahren des Fahrzeugsitzes an der nach oben weisenden Quaderfläche anbringen, während die Schiebeschalter zur Höhenverstellung des Sitzkissens an der senkrechten Quaderfläche, die vom Fahrzeugsitz abgewandt ist, angeordnet werden können. Trägt die Rückenlehne eine Kopfstütze, ist es weiter vorteilhaft, die elektrischen Schalter für die Höhenverstellung der Kopfstütze an der nach oben weisenden Quaderfläche vorzusehen. Zweckmäßigerweise werden sie hinter den Schiebeschalter für das Vor- und Zurückfahren des Fahrzeugsitzes vorgesehen, um eine gedankliche Zuordnung zur Lage der Kopfstützen zu erhalten.

In einer weiteren Ausgestaltung der Erfindung geht die Stirnseite des Griffteils in eine nach unten verlaufende Schräge über. Durch diese Maßnahme wird einmal das formschöne Erscheinungsbild des Sitzverstellhebels gesteigert. Zum anderen kann diese Schräge mit einer Ausnehmung versehen werden, in der sich weitere Schalter anordnen lassen. Es handelt sich dabei um Memory-Schalter, d. h. jedem Schalter ist eine vorgewählte Lage des Fahrzeugsitzes zugeordnet. Wird einer der Schalter betätigt, verstellt sich die Fahrzeugsitz in die entsprechende Lage.

Um Verschmutzung der Ausnehmung und unbeabsichtigtes Betätigen der Memory-Schalter zu verhindern, ist die Ausnehmung mit einem Deckel verschließbar.

Verstellt sich der Fahrzeugsitz, in dem einer der Memory-Schalter betätigt wird, kann es notwendig werden, den Verstellvorgang sofort abzubrechen, sei es, daß ein hinten sitzender Fahrgast gefährdet wird, oder sei es aus anderen Gründen. Es ist daher vorteilhaft, den Sitzverstellhebel mit einem Sicherheitsstopschalter zu versehen. Der Sicherheitsstopschalter wird zweckmäßigerweise an der nach oben weisenden Quaderfläche angebracht, so daß er rasch auffindbar ist und betätigt werden kann.

Ein weiterer Vorteil der Erfindung ergibt sich dadurch, daß durch die Anordnung des Sitzverstellhebels am Fahrzeugsitz weder in der Türverkleidung noch am Armaturenbrett oder in der Mittelkonsole ein zusätzlicher Platz für die Schalter zur Sitzverstellung benötigt wird.

Weitere Vorteile und Ausgestaltungen der Erfindung ergeben sich aus der Beschreibung eines bevorzugten Ausführungsbeispiels und der dazugehörigen Zeichnung. In der Zeichnung sind dargestellt.

Figur 1 ein Sitzverstellhebel, angeordnet am Fahrzeugsitz,

Figur 2 eine Draufsicht auf den Sitzverstellhebel, in vergrößertem Maßstab und

Figur 3 der Sitzverstellhebel in gleicher Ansicht wie in Fig. 1, aber in vergrößertem Maßstab.

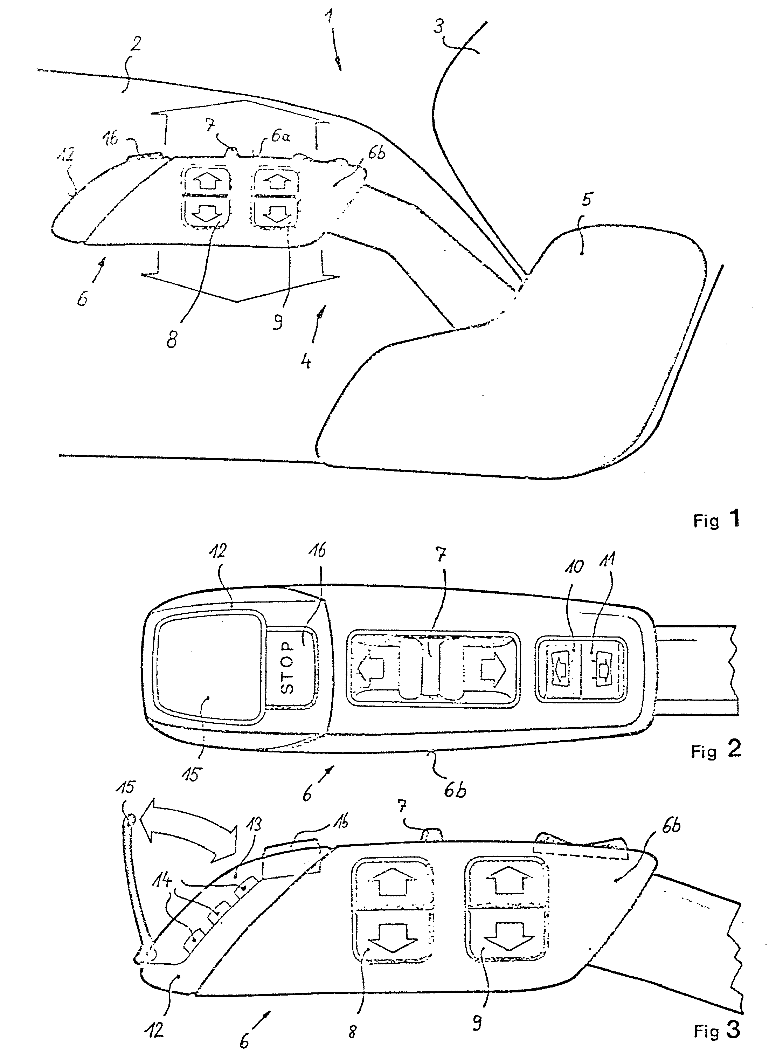

In Fig. 1 ist ein elektrisch verstellbarer Fahrzeugsitz 1 erkennbar, mit einem Sitzkissen 2 und einer Rückenlehne 3. Das Sitzkissen 2 und die Rückenlehne 3 lassen sich durch einen Sitzverstellhebel 4 in ihrer Lage verstellen. Mit dem Sitzverstellhebel 4 kann außerdem der Fahrzeugsitz 1 vor- oder zurückgefahren werden. Der Sitzverstellhebel 4 ist etwa in Höhe des Sitzkissens 2 im Bereich der Trennfuge zwischen Sitzkissen 2 und Rückenlehne 3 mit einem Ende am Fahrzeugsitz 1 angelenkt. Die Anlenkung selbst ist in der Fig. 1 nicht ersichtlich, sie wird von einer Blende 5 verdeckt.

Für die Verstellung des Fahrzeugsitzes 1 sind am Sitzverstellhebel 4 elektrische Schalter vorgesehen. Dabei sind die Schalter für die Verstellung der Rückenlehne 3 im Bereich der Anlenkung des Sitzverstellhebels 4 angeordnet. Sie sind wegen der Blende 5 in Fig. 1 nicht erkennbar. Sie können als Endschalter ausgeführt sein, die mit entsprechenden Anschlägen zusammenarbeiten ; sie können aber auch eine andere, hierfür geeignete Form aufweisen. Über diese Schalter läßt sich die Rückenlehne 3 nach hinten schwenken, wenn der Sitzverstellhebel 4 hochgezogen (Pfeilrichtung) wird. Beim Niederdrücken (Pfeilrichtung) des Sitzverstellhebels 4 schwenkt die Sitzlehne 3 nach vorne.

Das Griffteil 6 des Sitzverstellhebels 4 ist im wesentlichen quaderförmig ausgelegt. Es trägt die übrigen elektrischen Schalter für die Sitzverstellung. An seiner nach oben weisenden Quaderfläche 6a ist ein Schiebeschalter 7 für das Vor- und Zurückfahren des Fahrzeugsitzes 1 vorgesehen. Der Schiebeschalter 7 läßt sich in Längsrichtung des Griffteils 6 betätigen. Wird er nach hinten gedrückt, fährt der Fahrzeugsitz 1 nach hinten, wird er nach vorne gedrückt, fährt der Fahrzeugsitz 1 nach vorne. An der vom Fahrzeugsitz 1 abgewandten Quaderfläche 6b weist das Griffteil 6 zwei hintereinander angeordnete Schiebeschalter 8, 9 auf, mit senkrechter Betätigungsrichtung. Der Schiebeschalter 8 dient zur Höhenverstellung des vorderen Abschnitts des Sitzkissens 2, der Schiebeschalter 9 zur Höhenverstellung des hinteren Abschnitts. Dabei sind die Schiebeschalter 8, 9 wiederum in der gewünschten Verstellrichtung zu betätigen.

Die Rückenlehne 3 trägt eine Kopfstütze (nicht gezeichnet). Zu deren Verstellung sind an der Quaderfläche 6a Druckschalter 10, 11 hinter dem Schiebeschalter 7 angebracht.

Statt den Druckschaltern 10, 11 und den Schiebeschaltern 8, 9 können auch Wippschalter verwendet werden.

Die Stirnseite des Griffteiles 6 geht in eine nach unten verlaufende Schräge 12 über, in der eine Ausnehmung 13 vorgesehen ist. In der Ausnehmung 13 sind drei Memory-Schalter 14 angeordnet. Die Anzahl der Memory-Schalter 14 ist nicht auf drei begrenzt. Es ist ohne weiteres ersichtlich, daß weniger oder mehr vorgesehen sein können. Neben jedem Memory-Schalter läßt sich die gewünschte Sitzposition einspeichern. Die Einspeicherung erfolgt aus Sicherheitsgründen mit einem spitzen Gegenstand, wie Kugelschreiber oder Bleistift. Die Ausnehmung 13 ist mit einem Deckel 15 verschließbar.

Vor dem Schiebeschalter 7 weist das Griffteil 6 an seiner Oberseite einen Sicherheitsstopschalter 16 auf. In Fig. 2 liegt er zum großen Teil auf der Schräge 12. Wenn es die Platzverhältnisse zulassen, kann er aber auch ganz auf der Quaderfläche 6a angeordnet sein.

**Patentansprüche**

1. Elektrisch verstellbarer Fahrzeugsitz (1), bei dem sich durch Betätigen elektrischer Schalter das Sitzkissen (2) und die Rückenlehne (3) einzeln und/oder gemeinsam in ihrer Lage verstellen lassen, dadurch gekennzeichnet, daß der Fahrzeugsitz (1) einen Sitzverstellhebel (4) aufweist, der seitlich, etwa in Höhe des Sitzkissens (2) und im Bereich der Trennfuge zwischen Sitzkissen (2) und Rückenlehne (3) am Fahrzeugsitz (1) angeordnet ist und an dem die elektrischen Schalter für die Sitzverstellung vorgesehen sind.

2. Fahrzeugsitz nach Anspruch 1, dadurch gekennzeichnet, daß alle elektrischen Schalter oder ein Teil von ihnen so ausgelegt und am Sitzverstellhebel (4) angeordnet sind, daß ihre Betätigungsrichtung der gewünschten Verstellrichtung des Fahrzeugsitzes (1) entspricht.

3. Fahrzeugsitz nach Anspruch 1 oder 2, dadurch gekennzeichnet, daß der Sitzverstellhebel (4) mit einem Ende am Fahrzeugsitz (1) angelenkt ist und daß durch Hochziehen des Sitzverstellhebels (4) die Rückenlehne (3) nach hinten und durch Niederdrücken des Sitzverstellhebels (4) sie sich nach vorne schwenken läßt.

4. Fahrzeugsitz nach einem oder mehreren der Ansprüche 1 bis 3, dadurch gekennzeichnet, daß ein Griffteil (6) des Sitzverstellhebels (4) im wesentlichen quaderförmig ausgeführt ist und an seiner nach oben weisenden Quaderfläche (6a) einen Schiebeschalter (7) für das Vor und Zurückfahren des Fahrzeugsitzes (1) aufweist und daß an der senkrechten, dem Fahrzeugsitz (1) abgewandten Quaderfläche (6b) Schiebeschalter (8 ;

9) für die Höhenverstellung des Sitzkissens (2) angeordnet sind.

5. Fahrzeugsitz nach Anspruch 4, dadurch gekennzeichnet, daß das Griffteil (6) an seiner Stirnseite in eine nach unten verlaufende Schräge (12) übergeht und dort eine Ausnehmung (13) aufweist, in der Memory-Schalter (14) angeordnet sind, bei deren Betätigung der Fahrzeugsitz (1) sich in eine vorgewählte Lage verstellt.

6. Fahrzeugsitz nach Anspruch 5, dadurch gekennzeichnet, da die Ausnehmung (13) mit einem Deckel (15) verschließ bar ist.

7. Fahrzeugsitz nach Anspruch 5 oder 6, dadurch gekennzeichnet, daß an der nach oben weisenden Quaderfläche (6a) und/oder an der Schräge (12) ein Sicherheits-Stop-Schalter (16) vorgesehen ist.

8. Fahrzeugsitz nach einem oder mehreren der Ansprüche 4 bis 7, bei dem die Rückenlehne (3) mit einer Kopfstütze versehen ist, dadurch gekennzeichnet, daß der Sitzverstellhebel (4) an seiner nach oben weisenden Quaderfäche (6b) Betätigungsschalter (10 ; 11) für das Verstellen der Kopfstütze aufweist.

## Claims

1. An electrically-adjustable vehicle seat (1), wherein the seat squab (2) and the back rest (3) can be adjusted in their position individually and/or in common by actuation of electric switches, characterised in that the vehicle seat (1) comprises a seat adjustment lever (4) which is arranged laterally, substantially at the level of the seat squab (2) and the region of the joint between the seat squab (2) and the back rest (3) on the vehicle seat (1), and on which the electric switches for the seat adjustment are provided.

2. A vehicle seat according to Claim 1, characterised in that all the electric switches or some of them are so designed and arranged on the seat adjustment lever (4) that their direction of actuation corresponds to the desired direction of adjustment of the vehicle seat (1).

3. A vehicle seat according to Claim 1 or 2, characterised in that the seat adjustment lever (4) is articulated with one end to the vehicle seat (1) and that the back rest (3) can be pivoted to the rear by upward pulling of the seat adjustment lever (4) and pivoted forward by depression of the seat adjustment lever (4).

4. A vehicle seat according to one or more of Claims 1 to 3, characterised in that a handle part (6) of the seat adjustment lever (4) is made substantially of parallelepipedic form and comprises a slide switch (7) for the forward and rearward movement of the vehicle seat (1) on its upwardly-facing parallelepiped face (6a), and that slide switches (8 ; 9) for the height adjustment of the seat squab (2) are arranged on the vertical parallelepiped face (6) facing away from the vehicle seat (1).

5. A vehicle seat according to Claim 4, characterised in that the handle part (6) merges at its end into a downwardly-extending oblique part (12) and there has a recess (13) in which memory switches (14) are arranged on the actuation of which the vehicle seat (1) adjusts itself into a preselected position.

6. A vehicle seat according to Claim 5, characterised in that the recess (13) is closable with a cover (15).

7. A vehicle seat according to Claim 5 or 6, characterised in that a safety stop switch (16) is provided on the upwardly-facing parallelepiped face (6a) and/or on the oblique part (12).

8. A vehicle seat according to one or more of Claims 4 to 7, wherein the back rest (3) is provided with a head support, characterised in that the seat adjustment lever (4) comprises actuating switches (10 ; 11) on its upwardly-facing parallelepiped face (6b) for the adjustment of the head support.

## Revendications

1. Siège de véhicule (1) réglable électriquement, dans lequel le coussin du siège (2) et le dossier (3) peuvent être réglés en position individuellement et/ou en commun, en actionnant des commutateurs électriques, siège caractérisé en ce qu'il comporte un levier de réglage de siège (4) disposé latéralement contre le siège (1) de véhicule à peu près au niveau du coussin (2) du siège et au voisinage du joint de séparation entre le coussin (2) du siège et le dossier (3), et sur lequel sont prévus les commutateurs électriques pour le réglage du siège.

2. Siège de véhicule selon la revendication 1, caractérisé en ce que tous les commutateurs électriques ou bien une partie d'entre eux sont prévus et disposés sur le levier de réglage du siège (4) de façon que leur sens d'actionnement corresponde au sens de réglage souhaité du siège de véhicule (1).

3. Siège de véhicule selon la revendication 1 ou 2, caractérisé en ce que le levier de réglage du siège (4) est articulé par une de ses extrémités sur le siège de véhicule (1) et qu'en tirant vers le haut ce levier de réglage du siège (4), le dossier (3) peut être basculé vers l'arrière tandis qu'en poussant vers le bas le levier de réglage du siège (4) le dossier peut être basculé vers l'avant.

4. Siège de véhicule selon une ou plusieurs des revendications 1 à 3, caractérisé en ce qu'une poignée (6) du levier de réglage du siège (4) a une forme essentiellement parallélépipédique et comporte sur sa surface rectangulaire (6a) tournée vers le haut, un commutateur coulissant (7) pour le déplacement en avant et en arrière du siège de véhicule (1), tandis que sur la surface rectangulaire verticale (6b) opposée au siège de véhicule (1) des commutateurs coulissants (8 ; 9) sont disposés pour le réglage en hauteur du coussin (2) du siège.

5. Siège de véhicule selon la revendication 4, caractérisé en ce que la poignée (6) se prolonge à sa face frontale par une partie oblique (12) s'étendant vers le bas et comporte à cet endroit un évidement (13) dans lequel sont disposés des commutateurs de mémoire (14), lors de l'actionnement desquels le siège de véhicule (1) se déplace dans une position présélectionnée.

6. Siège de véhicule selon la revendication 5, caractérisé en ce que l'évidement (13) est susceptible d'être fermé par un couvercle (15).

7. Siège de véhicule selon la revendication 5 ou 6, caractérisé en ce qu'il est prévu sur la surface rectangulaire (6a) tournée vers le haut et/ou sur la partie oblique (12), un commutateur d'arrêt de sécurité (16).

8. Siège de véhicule selon une ou plusieurs des revendications 4 à 7, dans lequel le dossier (3) est muni d'un appui-tête, siège caractérisé en ce que le levier de réglage de siège (4) comporte sur sa surface rectangulaire (6b) tournée vers le haut, des commutateurs d'actionnement (10 ; 11) pour le réglage de l'appui-tête.

Fig 1

Fig 2

Fig 3